# EUROPÄISCHE PATENTSCHRIFT

(11) **EP 3 030 372 B1**
(45) Veröffentlichungstag und Bekanntmachung des Hinweises auf die Patenterteilung: **20.07.2022**
(21) Anmeldenummer: 14747929.9
(22) Anmeldetag: 05.08.2014
(51) Int. Cl.: B23K 9/235, B23K 33/00

(54) **VERFAHREN ZUM HERSTELLEN EINER SCHWEISSVERBINDUNG**
METHOD FOR MANUFACTURING A WELDED CONNECTION
PROCÉDÉ DE FABRICATION D'UNE LIAISON SOUDÉE

(30) Priorität: 06.08.2013 EP 13179352
(43) Veröffentlichungstag der Anmeldung: 15.06.2016
(73) Patentinhaber: MAGNA STEYR Fahrzeugtechnik AG & Co KG, 8041 Graz (AT)
(72) Erfinder: KARNER, Werner, A-8055 Graz (AT); TREVEN, Helmut, A-8077 Gössendorf (AT)
(74) Vertreter: Zangger, Bernd
(86) Internationale Anmeldenummer: PCT/EP2014/066829
(87) Internationale Veröffentlichungsnummer: WO 2015/018833

(56) Entgegenhaltungen:
- EP-A1- 0 534 704
- DE-A1- 3 909 620
- US-A1- 2013 028 659

## Beschreibung

### Gebiet der Erfindung

Die vorliegende Erfindung betrifft ein Verfahren zum Herstellen einer Schweißverbindung zwischen einem Stahlblech und einem Aluminiumblech.

### Stand der Technik

Es sind bereits Verfahren zum Herstellen einer Schweißverbindung zwischen einem Stahlblech und einem Aluminiumblech bekannt. Insbesondere ist bekannt dass ein Stahlblech und ein Aluminiumblech mit Hilfe des Cold Metal Transfer (CMT) Verfahrens, entwickelt von der Firma Fronius, verschweißt werden können. Dazu werden das Stahlblech und das Aluminiumblech senkrecht aufgestellt und in der Position PG stehend und fallend von beiden Seiten mit jeweils einer Schweißanlage verschweißt. Die Stirnseite des Stahlbleches muss beim Schweißen verzinkt sein, so dass zuvor bereits verzinkte Stahlbleche nach einem Beschnitt im Schweißbereich an dieser Stelle nachträglich, vor dem Schweißen, nochmals verzinkt werden müssen.

Die DE 39 09 620 A1 offenbart ein Verfahren zum Stumpfschweißen von Blechen vermittels von Laserstrahlen, wobei in einem ersten Verfahrensschritt die zu verschweißenden Bleche mit ihren Stirnflächen gegeneinandergepresst verspannt werden, wobei an den Stirnflächen vorhandene Grate in die gleiche Richtung weisen.

Die US 2013 / 028659 A1 bildet die Grundlage für den Oberbegriff des Anspruchs 1 und offenbart ein Verfahren zum Verschweißen zweier Metallplatten mit unterschiedlichen Schmelztemperaturen, wobei an einer Stirnseite einer der Platten V-förmig zueinander abgeschrägte, beschichtete Kanten ausgebildet sind und an der anderen Stirnseite eine Ausnehmung zur Aufnahme der V-förmigen Ausbildung.

Die EP 0 534 704 A1 offenbart ein Herstellungsverfahren einer Fahrzeugverkleidung, umfassend die folgenden Schritte: Herstellen einer Vielzahl von gescherten Stahlblechmaterialien, wobei jedes Stahlblechmaterial einen Grat an einer Kante einer Endfläche und ein Durchhängen an einer gegenüberliegenden Kante einer Endfläche aufweist; Halten der Stahlblechmaterialien; Bestrahlen eines Laserstrahls auf einen Widerlagerabschnitt der aneinandergereihten Stahlbleche, Bewegen des Laserstrahls entlang des Widerlagerabschnitts und Zuführen eines Füllstoffs zum Widerlagerabschnitt, um eine Schweißraupe zu bilden, die die aneinandergereihten Blechmaterialien zu einem Pressmaterial verbindet; Einstellen des Pressmaterials in einer Stanzvorrichtung; und Prägen des Pressmaterials in eine Fahrzeugverkleidung, wobei während des Schrittes des Haltens der Stahlblechmaterialien die Endflächen der Stahlblechmaterialien aneinander anliegen, wobei die Grate der anliegenden Stahlblechmaterialien in die gleiche Richtung gerichtet sind; wobei während des Schrittes des Bestrahlens eines Laserstrahls der Laserstrahl von einer Seite der Durchbiegungen der aneinandergereihten Stahlblechmaterialien auf den Widerlagerabschnitt der aneinandergereihten Stahlblechmaterialien bestrahlt wird; und wobei während des Schrittes des Einstellens des Pressmaterials das Pressmaterial in der Stanzvorrichtung in einer solchen Richtung eingestellt wird, dass eine Oberfläche des Pressmaterials gegenüber einer laserstrahlbestrahlten Seitenfläche einer Außenfläche entspricht, wenn sie gestanzt und dann an einem Fahrzeug montiert wird.

### Zusammenfassung der Erfindung

Es ist eine Aufgabe der Erfindung, ein Verfahren zum Herstellen einer Schweißverbindung zwischen einem Stahlblech und einem Aluminiumblech anzugeben, das einfach und kostengünstig ist und dabei eine feste Schweißverbindung erzeugt.

Die Lösung der Aufgabe erfolgt durch ein Verfahren zum Herstellen einer Schweißverbindung zwischen einem Stahlblech und einem Aluminiumblech mit einem Schweißbrenner, wobei das Stahlblech an seiner Oberseite und seiner Unterseite im Bereich der Verschweißung eine Beschichtung aufweist, wobei das Stahlblech und das Aluminiumblech horizontal eingespannt werden, wobei das Stahlblech und das Aluminiumblech in Beschnittbereichen miteinander verschweißt werden, wobei die Beschnittbereiche einseitige Schnittgrate aufweisen, wobei die Schnittgrate beim Schneiden mit einer Schlagschere entstanden sind, wobei die Schnittgrate beim Verschweißen in entgegengesetzte Richtungen weisen, wobei der Schnittgrat des Stahlbleches beim Verschweißen nach oben weist, wobei das Stahlblech und das Aluminiumblech beim Einspannen im Stumpfstoß zueinander positioniert werden und lediglich einseitig in der Schweißposition PA miteinander verschweißt werden, sodass sich an der Ober- und Unterseite von Stahlblech und Aluminiumblech eine Schweißraupe bildet, sodass sich das Stahlblech und das Aluminiumblech an der dem Schweißbrenner zugewandten Seite und der dem Schweißbrenner abgewandten Seite verbinden.

Erfindungsgemäß werden Stahlblech und Aluminiumblech also nur von einer Seite miteinander verschweißt, wodurch nur ein einziger Schweißbrenner und somit nur ein einziger Strompfad während des Schweißens benötigt wird. Dies wird für eine qualitativ gute Schweißverbindung dadurch ermöglicht, dass die Bleche horizontal, also liegend angeordnet und in ihrer Position fixiert werden, das Stahlblech an dessen Oberseite und Unterseite beschichtet, insbesondere verzinkt, ist und Aluminiumblech und Stahlblech in der Schweißposition PA, also waagrecht verschweißt werden. Beim Schweißen bzw. Schweißlöten schmilzt das Aluminiumblech an der Stoßstelle über die gesamte Dicke des Aluminiumblechs und gegebenenfalls zusätzlich ein Schweißdraht bzw. Schweißzusatz. Diese Schmelze bzw. diese beiden Schmelzen bilden das primäre Schmelzgut, welches die Beschichtung, zum Beispiel eine Zinkschicht des Stahlbleches nur geringfügig an der Oberfläche zum Schmelzen bringt. Das fließfähige Aluminium, der Schweißdraht bzw. -zusatz und die an der Oberfläche aufgeschmolzene Beschichtung (Zinkschicht) verbinden sich und stellen eine stoffschlüssige Verbindung her. Das aufgeschmolzene Material des Aluminiumblechs und des Schweißdrahtes bzw. Schweißzusatzes rinnt dabei an der Stoßstelle nach unten durch und verbindet sich mit der auf der Unterseite des Stahlblechbauteils befindlichen Beschichtung. Eine auf dem Stahlblech befindliche Zinkschicht schmilzt beispielsweise bei ca. 400 Grad Celsius, das Aluminiumblech bei ca. 600 Grad Celsius. Da während des Schweißens die Zinkschicht nur an der Oberfläche aufgeschmolzen wird, ist ein "schnelles Schweißen" möglich. Es entsteht eine beidseitige Schweißraupe, wobei die Schweißraupe großteils aus geschmolzenem Aluminium und dem geschmolzenen Schweißdraht bzw. Schweißzusatz gebildet ist.

Erfindungsgemäß werden das Stahlblech und das Aluminiumblech in Beschnittbereichen miteinander verschweißt, wobei die Beschnittbereiche einseitige Schnittgrate aufweisen, wobei die Schnittgrate beim Verschweißen in entgegengesetzte Richtungen weisen. Die Beschnittbereiche sind erfindungsgemäß durch Beschneiden der Metallbleche mittels Schlagscheren entstehen.

Erfindungsgemäß weist der Schnittgrat des Stahlbleches beim Verschweißen nach oben, also in Richtung zum Schweißbrenner.

Weiterbildungen der Erfindung sind in den abhängigen Ansprüchen, der Beschreibung sowie den beigefügten Zeichnungen angegeben.

Bevorzugt werden das Stahlblech und das Aluminiumblech im MIG-Verfahren, insbesondere im CMT-Verfahren (Cold Metal Transfer) oder CMT-Advanced-Verfahren miteinander verschweißt. Die Erfindung ist daher nicht auf Schweißverfahren mit Gleichstrom beschränkt, sondern kann beispielsweise auch mit Schweißverfahren die Wechselstrom oder pulsierenden Gleichstrom verwenden durchgeführt werden.

Gemäß einer Ausführungsform wird das Stahlblech an einer Stahlstirnseite mit dem Aluminiumblech verschweißt, wobei das Stahlblech an der Stahlstirnseite eine Beschichtung, insbesondere eine Zinkschicht oder Aluminiumschicht aufweist. In diesem Fall entsteht eine Schmelzverbindung zwischen der Aluminiumschmelze und der Beschichtung an der Stirnseite des Aluminiumbleches und gegebenenfalls des Schweißdrahtes.

Bevorzugt ist die Stahlstirnseite nicht beschichtet. In diesem Fall legt sich das Schmelzgut nur an der Stahlstirnseite an, so dass eine Verschweißung an der Stirnseite nur in diesem weiteren Sinn entsteht.

Ein kostenintensives nachträgliches Anfräsen und Verzinken des Stahlbleches kann hierbei entfallen.

Bevorzugt werden das Stahlblech und das Aluminiumblech zum Einspannen auf Blöcke aufgelegt, insbesondere auf Metallblöcke.

Bevorzugt weisen die Blöcke im Bereich der Schweißnaht einen Abstand von 5 - 50 mm auf, besonders bevorzugt 8 - 20 mm, weiter bevorzugt 8 - 10 mm.

Bevorzugt werden das Stahlblech und das Aluminiumblech zum Einspannen auf deren Oberseite mit einer Spannvorrichtung niedergedrückt.

Die Spannvorrichtung ist besonders bevorzugt so ausgebildet, dass sie Spannelemente umfasst die im Bereich der Schweißnaht einen minimalen Abstand von 2 - 40 mm aufweisen, insbesondere 5 - 12 mm, besonders bevorzugt 5 - 7 mm, noch weiter bevorzugt etwa 6 mm.

Besonders vorteilhaft ist, wenn der Abstand der Spannelemente im Bereich der Schweißnaht nach oben hin zunimmt, die Stirnseiten der Spannelemente verjüngen sich also zu den Blechen hin. Dadurch ist eine bessere Zugänglichkeit für einen Schweißbrenner gegeben.

Bevorzugt ist ein Schweißbrenner beim Schweißen relativ zur Senkrechten zum Aluminiumblech hin geneigt, insbesondere in einem Winkel von 0,5 - 10 Grad zur Senkrechten, vorzugsweise etwa 2-5 Grad zur Senkrechten.

### Kurzbeschreibung der Zeichnungen

Die Erfindung wird im Folgenden beispielhaft unter Bezugnahme auf die Zeichnungen beschrieben.
- Fig. 1 a,b,c: zeigen Schritte eines Verfahrens zum Herstellen einer Schweißverbindung das aus dem Stand der Technik bekannt ist.
- Fig. 2 a,b,c: zeigen Schritte eines Verfahrens zum Herstellen einer Schweißverbindung.
- Fig. 3: ist eine genauere schematische Ansicht des Verfahrensschrittes gemäß Fig. 2b.
- Fig. 4: ist eine schematische Ansicht der erfindungsgemäßen Beschnittbereiche der Bleche mit einseitigen Schnittgraten.

### Detaillierte Beschreibung der Erfindung

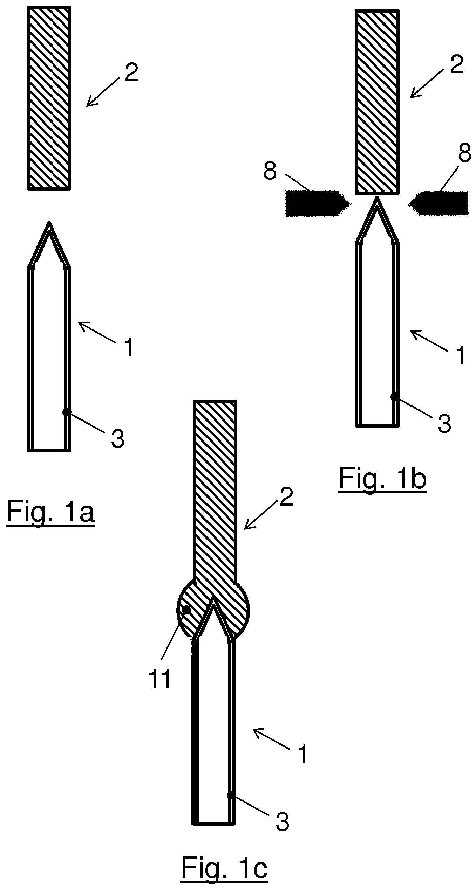

In Fig. 1 a, b und c sind Schritte eines Verfahrens zum Herstellen einer Schweißverbindung zwischen einem Stahlblech 1 und einem Aluminiumblech 2 das bereits bekannt ist. In diesem Verfahren werden die beiden Bleche 1, 2 senkrecht aufgestellt (Fig. 1a). Das Stahlblech ist rundum verzinkt, also sowohl an der Oberfläche 3 des Stahlbleches 1, als auch an der hier spitz dargestellten Stirnseite des Stahlbleches 1, die nach einem Beschnitt nachverzinkt wurde. Wie in Fig. 1b dargestellt, wird auf beiden Seiten der künftigen Schweißnaht je eine Schweißmaschine, dargestellt als Schweißbrenner 8, verwendet und mit beiden Schweißbrennern 8 gleichzeitig in der Schweißposition PG geschweißt. Es entsteht, wie in Fig. 1c dargestellt, eine Hybridplatine aus Stahl und Aluminium mit einer beidseitigen Schweißraupe 11.

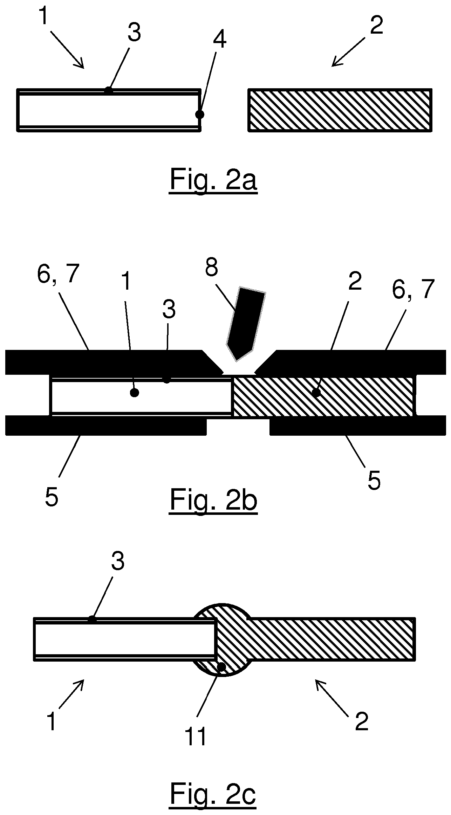

Ein Verfahren zum Herstellen einer Schweißverbindung zwischen einem Stahlblech 1 und einem Aluminiumblech 2, beispielsweise A15xxx oder A16xxx, ist in Fig. 2 a, b und c dargestellt. Das Stahlblech 1 wird mit dem Aluminiumblech 2 an einer Stahlstirnseite 4 verschweißt, die keine Zinkschicht aufweist, da ein Zuschnitt beispielsweise mit einer Schlagschere erfolgte. Die Oberfläche 3 des Stahlbleches 1 ist hingegen verzinkt, im Schweißnahtbereich möglichst kratzerfrei und mit Präzisionsreiniger gesäubert. Das Aluminiumblech 2 ist gebürstet und entfettet und ebenfalls mit Präzisionsreiniger gesäubert. Das Stahlblech 1 und das Aluminiumblech 2 werden horizontal eingespannt (Fig. 2b) und lediglich einseitig in der Schweißposition PA mit einem Schweißbrenner 8 im CMT (Cold Metal Transfer) Verfahren miteinander verschweißt. Beide Bleche werden auf Metallblöcke 5 aufgelegt, die voneinander beabstandet angeordnet sind. An der Oberseite werden die Bleche mit einer Spannvorrichtung 6 niedergedrückt. Die Spannvorrichtung 6 umfasst Spannelemente 7 die flächig an den beiden Blechen anliegen und andrücken. Diese Spannelemente 7 weisen im Bereich der künftigen Schweißnaht einen Abstand auf, so dass das Ansetzen des Schweißbrenners 8 ermöglicht wird. Durch das Verschweißen entsteht, wie in Fig. 2c dargestellt, eine beidseitige Schweißraupe 11, da die Stahl-Aluminium-Hybridplatte trotz einseitiger Brennerkonstellation komplett durchgeschweißt wird. Dabei wurde das Aluminium in schmelzflüssigen Zustand versetzt, der Stahl nicht. Das Zink wurde als Flussmittel genutzt.

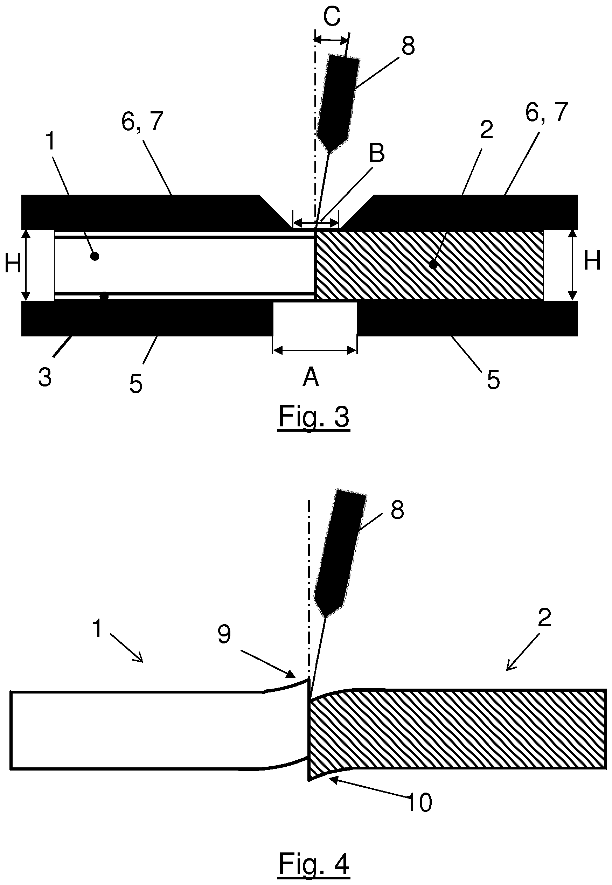

Fig. 3 ist eine genauere schematische Ansicht eines Schweißvorganges. Die Metallblöcke 5 weisen im Bereich der Schweißnaht einen Abstand A von 8 - 10 mm auf. Die Spannelemente 7 an der Oberseite der Bleche weisen einen Abstand B von mindestens 6 mm auf, der nach oben hin zunimmt. Der Schweißbrenner 8 verwendet das Schutzgas Argon 4.6-5.0 und wird in Schweißposition PA im Stumpfstoß mit einem Vorschub von 0,3-1 m/Min eingesetzt. Es wird 10-15 Grad stechend geschweißt. Der Schweißbrenner 8 ist in einem Winkel C von etwa 2-5 Grad zur Senkrechten zum Aluminiumblech 2 hin gekippt. Die Höhe H, beträgt sowohl beim Aluminiumblech 2 als auch beim Stahlblech 1, inklusive dessen Zinkschicht an der Oberfläche 3, etwa 0,8 - 4 mm, vorzugsweise 1,5 - 2 mm. Für die Zinkschicht wird beispielsweise Z100/ 100-Z350/350 oder ZE50/50-ZE100/100 verwendet. Als Schweißzusatz kann abhängig vom Aluminiumpartner beispielsweise verwendet werden: für Al5xxx AlMg4,5MnZr, für Al6xxx AlSi3Mnl.

Aluminisierte Stahlbleche weisen eine dünne Aluminium-Schicht auf, beispielsweise im Bereich von 60 µm. Als Schweißzusätze können auch die oben genannten zur Anwendung kommen.

Fig. 4 ist eine schematische Ansicht der erfindungsgemäßen Beschnittbereiche der Bleche mit einseitigen Schnittgraten 9 und 10, die beim Schneiden mit einer Schlagschere entstanden. Die Schnittgrate 9, 10 weisen beim Verschweißen in entgegengesetzte Richtungen. Der Schnittgrat 9 des Stahlbleches 1 weist nach oben, zum Schweißbrenner 8.

### Bezugszeichenliste

- 1: Stahlblech
- 2: Aluminiumblech
- 3: Oberfläche des Stahlbleches
- 4: Stahlstirnseite
- 5: Block
- 6: Spannvorrichtung
- 7: Spannelement
- 8: Schweißbrenner
- 9: Schnittgrat des Stahlbleches
- 10: Schnittgrat des Aluminiumbleches
- 11: Schweißraupe

- A: Abstand der Blöcke
- B: Abstand der Spannelemente
- C: Winkel des Schweißbrenners zur Senkrechten
- H: Höhe

## Patentansprüche

1. Verfahren zum Herstellen einer Schweißverbindung zwischen einem Stahlblech und einem Aluminiumblech mit einem Schweißbrenner (8), wobei das Stahlblech (1) an seiner Oberseite und seiner Unterseite im Bereich der Verschweißung eine Beschichtung (3) aufweist, wobei das Stahlblech (1) und das Aluminiumblech (2) horizontal eingespannt werden, **dadurch gekennzeichnet, dass** das Stahlblech (1) und das Aluminiumblech (2) in Beschnittbereichen miteinander verschweißt werden, wobei die Beschnittbereiche einseitige Schnittgrate (9, 10) aufweisen, wobei die Schnittgrate (9, 10) beim Schneiden mit einer Schlagschere entstanden sind, wobei die Schnittgrate (9, 10) beim Verschweißen in entgegengesetzte Richtungen weisen, wobei der Schnittgrat (9) des Stahlbleches (1) beim Verschweißen nach oben weist, wobei das Stahlblech (1) und das Aluminiumblech (2) beim Einspannen im Stumpfstoß zueinander positioniert werden und lediglich einseitig in der Schweißposition PA miteinander verschweißt werden, sodass sich an der Ober- und Unterseite von Stahlblech (1) und Aluminiumblech (2) eine Schweißraupe (11) bildet, sodass sich das Stahlblech (1) und das Aluminiumblech (2) an der dem Schweißbrenner (8) zugewandten Seite und der dem Schweißbrenner (8) abgewandten Seite verbinden.

2. Verfahren nach Anspruch 1,
**dadurch gekennzeichnet, dass** das Stahlblech (1) und das Aluminiumblech (2) im MIG-Verfahren, insbesondere im CMT-Verfahren oder CMT-Advanced-Verfahren miteinander verschweißt werden.

3. Verfahren nach einem der zuvor genannten Ansprüche,
**dadurch gekennzeichnet, dass** die Beschichtung (3) des Stahlbleches (1) eine Verzinkung oder eine Aluminisierung an der Oberseite und der Unterseite des Stahlbleches (1) ist.

4. Verfahren nach einem der zuvor genannten Ansprüche, **dadurch gekennzeichnet, dass** das Stahlblech (1) an einer Stahlstirnseite (4) mit dem Aluminiumblech (2) verschweißt wird, wobei das Stahlblech (1) an der Stahlstirnseite (4) eine Beschichtung (3), insbesondere eine Zinkschicht oder eine Aluminiumschicht, aufweist oder an der Stahlstirnseite (4) keine Beschichtung (3) aufweist.

5. Verfahren nach einem der zuvor genannten Ansprüche, **dadurch gekennzeichnet, dass** das Stahlblech (1) und das Aluminiumblech (2) zum Einspannen auf Blöcke (5) aufgelegt werden.

6. Verfahren nach Anspruch 5,
**dadurch gekennzeichnet, dass** die Blöcke (5) im Bereich der Schweißnaht einen Abstand (A) von 5 - 50 mm aufweisen, bevorzugt 8 - 20 mm, besonders bevorzugt 8 - 10 mm.

7. Verfahren nach Anspruch 5 oder 6,
**dadurch gekennzeichnet, dass** das Stahlblech (1) und das Aluminiumblech (2) zum Einspannen auf deren Oberseite mit einer Spannvorrichtung (6) niedergedrückt werden.

8. Verfahren nach Anspruch 7,
**dadurch gekennzeichnet, dass** die Spannvorrichtung (6) so ausgebildet ist, dass sie Spannelemente (7) umfasst, die im Bereich der Schweißnaht einen Abstand (B) von 2 - 40 mm aufweisen, bevorzugt 5 - 12 mm, besonders bevorzugt 5 - 7 mm, besonders bevorzugt 6 mm.

9. Verfahren nach Anspruch 7 oder 8,
**dadurch gekennzeichnet, dass** der Abstand (B) der Spannelemente (7) im Bereich der Schweißnaht nach oben hin zunimmt.

10. Verfahren nach einem der zuvor genannten Ansprüche, **dadurch gekennzeichnet, dass** ein Schweißbrenner (8) beim Schweißen relativ zur Senkrechten zum Stahlblech (1) hin geneigt ist, insbesondere in einem Winkel (C) von 0,5-10 Grad zur Senkrechten, vorzugsweise von etwa 2-5 Grad zur Senkrechten.

## Claims

1. Method for manufacturing a welded connection between a steel sheet and an aluminium sheet using a welding torch (8), wherein the steel sheet (1) has a coating (3) on its upper side and its lower side in the region of the weld, wherein the steel sheet (1) and the aluminium sheet (2) are clamped horizontally, **characterized in that** the steel sheet (1) and the aluminium sheet (2) are welded together in trimming regions, wherein the trimming regions have cutting burrs (9, 10) on one side, wherein the cutting burrs (9, 10) have formed during cutting with guillotine shears, wherein the cutting burrs (9, 10) point in opposite directions during the welding process, wherein the cutting burr (9) of the steel sheet (1) points upwards during the welding process, wherein the steel sheet (1) and the aluminium sheet (2) are positioned to form a butt joint when clamping and are welded together on only one side in the welding position PA, such that a welding bead (11) forms on the upper side and the lower side of the steel sheet (1) and the aluminium sheet (2), with the result that the steel sheet (1) and the aluminium sheet (2) join together on the side facing the welding torch (8) and on the side facing away from the welding torch (8).

2. Method according to Claim 1,
**characterized in that** the steel sheet (1) and the aluminium sheet (2) are welded together by the MIG process, in particular by the CMT process or Advanced CMT process.

3. Method according to either of the preceding claims,
**characterized in that** the coating (3) of the steel sheet (1) is a zinc coating or an aluminized coating on the upper side and the lower side of the steel sheet (1).

4. Method according to one of the preceding claims,
**characterized in that** the steel sheet (1) is welded to the aluminium sheet (2) at a steel end face (4), wherein the steel sheet (1) has a coating (3), in particular a zinc layer or an aluminium layer, on the steel end face (4), or has no coating (3) on the steel end face (4).

5. Method according to one of the preceding claims,
**characterized in that**, for the purpose of clamping, the steel sheet (1) and the aluminium sheet (2) are placed on blocks (5).

6. Method according to Claim 5,
**characterized in that** the blocks (5) have a spacing (A) of 5-50 mm, preferably 8-20 mm, particularly preferably 8-10 mm, in the region of the weld seam.

7. Method according to Claim 5 or 6,
**characterized in that**, for the purpose of clamping, the steel sheet (1) and the aluminium sheet (2) are pressed down on the upper side thereof by means of a clamping device (6).

8. Method according to Claim 7,
**characterized in that** the clamping device (6) is designed in such a way that it comprises clamping elements (7) which have a spacing (B) of 2-40 mm, preferably 5-12 mm, particularly preferably 5-7 mm, particularly preferably 6 mm, in the region of the weld seam.

9. Method according to Claim 7 or 8,
**characterized in that** the spacing (B) of the clamping elements (7) increases in an upward direction in the region of the weld seam.

10. Method according to one of the preceding claims,
**characterized in that** a welding torch (8) slopes relative to the perpendicular to the steel sheet (1) during welding, in particular at an angle (C) of 0.5-10 degrees to the perpendicular, preferably of about 2-5 degrees to the perpendicular.

## Revendications

1. Procédé de fabrication d'une liaison soudée entre une tôle d'acier et une tôle d'aluminium à l'aide d'un chalumeau de soudage (8), la tôle d'acier (1) comportant un revêtement (3) sur face supérieure et sa face inférieure au niveau de la soudure, la tôle d'acier (1) et la tôle d'aluminium (2) étant serrées horizontalement, **caractérisé en ce que** la tôle d'acier (1) et la tôle d'aluminium (2) sont soudées l'une à l'autre dans des zones rognées, les zones rognées comportant des bavures de coupe unilatérale (9, 10), les bavures de coupe (9, 10) étant générées lors de la coupe à une cisaille-guillotine, les bavures de coupe (9, 10) étant dirigées en sens opposés lors du soudage, la bavure de coupe (9) de la tôle d'acier (1) étant dirigée vers le haut lors du soudage, la tôle d'acier (1) et la tôle d'aluminium (2) étant positionnées bout à bout l'une à l'autre lors du serrage et étant soudées l'une à l'autre uniquement d'un côté dans la position de soudage PA de sorte qu'un cordon de soudure (11) se forme sur la face supérieure et la face inférieure de la tôle d'acier (1) et de la tôle d'aluminium (2) de sorte que la tôle d'acier (1) et la tôle d'aluminium (2) se lient du côté dirigé vers le chalumeau de soudage (8) et du côté opposé au chalumeau de soudage (8).

2. Procédé selon la revendication 1, **caractérisé en ce que** la tôle d'acier (1) et la tôle d'aluminium (2) sont soudées l'une à l'autre selon le procédé MIG, en particulier le procédé CMT ou le procédé CMT-Advanced.

3. Procédé selon l'une des revendications précédentes, **caractérisé en ce que** le revêtement (3) de la tôle d'acier (1) est une galvanisation ou une aluminisation sur la face supérieure et la face inférieure de la tôle d'acier (1).

4. Procédé selon l'une des revendications précédentes, **caractérisé en ce que** la tôle d'acier (1) est soudée à la tôle d'aluminium (2) sur une face d'acier frontale (4), la tôle d'acier (1) comportant un revêtement (3), notamment une couche de zinc ou une couche d'aluminium, sur la face d'acier frontale (4) ou ne comportant pas de revêtement (3) sur la face d'acier frontale (4).

5. Procédé selon l'une des revendications précédentes, **caractérisé en ce que** la tôle d'acier (1) et la tôle d'aluminium (2) sont placées sur des blocs (5) pour effectuer le serrage.

6. Procédé selon la revendication 5, **caractérisé en ce que** les blocs (5) sont à une distance (A) de 5 à 50 mm, de préférence de 8 à 20 mm, de manière particulièrement préférée de 8 à 10 mm, dans la zone du cordon de soudure.

7. Procédé selon la revendication 5 ou 6, **caractérisé en ce que** la tôle d'acier (1) et la tôle d'aluminium (2) sont affaissées sur la face supérieure avec un dispositif de serrage (6) afin d'effectuer le serrage.

8. Procédé selon la revendication 7, **caractérisé en ce que** le dispositif de serrage (6) est conçu de telle sorte qu'il comprenne des éléments de serrage (7) qui sont à une distance (B) de 2 à 40 mm, de préférence de 5 à 12 mm, de manière particulièrement préférée de 5 à 7 mm, de manière particulièrement préférée 6 mm, dans la zone du cordon de soudure.

9. Procédé selon la revendication 7 ou 8, **caractérisé en ce que** la distance (B) des éléments de serrage (7) dans la zone du cordon de soudure augmente vers le haut.

10. Procédé selon l'une des revendications précédentes, **caractérisée en ce qu'**un chalumeau de soudage (8) est incliné pendant le soudage par rapport à la perpendiculaire à la tôle d'acier (1), en particulier suivant un angle (C) de 0,5 à 10 degrés par rapport à la perpendiculaire, de préférence d'environ 2 à 5 degrés par rapport à la perpendiculaire.
